# EUROPEAN PATENT APPLICATION

(11) **EP 3 653 536 A1**
(43) Date of publication of application: **20.05.2020**
(21) Application number: 18211685.5
(22) Date of filing: 11.12.2018
(51) Int. Cl.: B65F 1/00, B07C 5/34, B65F 1/10, B65F 1/14

(54) **APPARATUS AND METHOD FOR THE COLLECTION OF DIFFERENTIATED SOLID URBAN WASTE**

(30) Priority: 14.11.2018 IT 201800010323
(71) Applicant: Toffi, Roberta, 86100 Campobasso (IT); Toffi, Raffaella, 86010 Ferrazzano (CB) (IT); Toffi, Karen, 86010 Ferrazzano (CB) (IT)
(72) Inventor: Toffi, Nino Emanuele, 86010 Ferrazzano (CB) (IT)
(74) Representative: De Tullio, Michele Elio

(57) **Abstract**

The apparatus comprises a container (100), namely a skip for collecting solid urban waste, positioned upstream of the apparatus, provided with:

- identification key means assigned to an individual user authorised to deposit,

- closure means (101),

- means for controlling opening of the closure means,

- a control unit linked to locking and unlocking means for said closure means,

- means (114) for containing and identifying a bag (130) containing inside it waste to be differentiated.

The apparatus is further provided with means (113, 117, 118) which slide on motorised rack means (150), for containing, transporting and releasing a bag (130) containing the differentiated waste into at least one of containers (200, 300, 400, 500, 600, 700), namely skips for collecting bags of waste, arranged along the line of operation of the apparatus. All of skips (100, 200, 300, 400, 500, 600, 700) are inserted in series into a structure (160) anchored to the ground and capable of ensuring the precise positioning and protection thereof.

## Description

### Field of the invention

The subject matter of the present invention concerns in general to the field of collection systems for solid urban waste (SUW).

More specifically, the present invention relates to an apparatus and associated method for the differentiated collection of solid urban waste and the checking thereof with the aim of proper differentiation and reuse.

### Description of the prior art

At present, in the absence of uniform regulations, there are numerous techniques for the differentiated collection of solid urban waste.

To date, the most widespread technique involves using containers, namely bins or skips, located at the roadside and labelled with words and/or symbols, usually of different colours, which indicate what can be placed inside.

Said system suffers intrinsic issues due, for example, to the bins being left at the complete mercy of vandals, animals of all kinds and weather events, and to its being impossible for an administrative, for example municipal, authority responsible for maintaining urban cleanliness to identify the depositor of the SUW and to monitor the weight and type of SUW. A further issue is due to the complete absence of checking of the waste deposited which results in the majority of said waste remaining undifferentiated, so making said collection system highly vulnerable.

Another method involves using large skips associated with a certain number of building units with access provided by means of a magnetic card in the possession of each user identified as a representative for each building unit. In this case, the deposited waste is checked by an operator responsible for picking up the waste which, in the event of finding any irregularities in terms of incorrectly differentiated waste deposition, imposes a penalty on the building unit associated with this skip.

Said approach, however, does not involve any reliable criteria because it is dependent on the judgement of the operator, so giving rise to conflict between users because it is impossible to the identify the person or persons who caused the breach.

Another known method is door to door collection which involves providing inhabitants with a certain number of containers, each dedicated to a particular type of SUW, into which the inhabitant places the selected waste to be picked up in accordance with a weekly or monthly schedule. There are also SUW collection trucks equipped with appropriate containers which tour around some urban areas at specified times, so enabling users to deposit the differentiated waste close to their homes.

These solutions also involve innumerable drawbacks: bulky containers the storage of which is entirely the responsibility of the user, pick-up of wet waste on alternate days with consequent fermentation and rotting of wet waste stored for a longer period, the need for users to be present at their home address at the set times for handover of the specific waste, containers at the mercy of vandalisation and predation by stray animals, the collected SUW is not weighed and thoroughly checked, and finally, but no less importantly, the cost of deposition is high without any collective benefit being achieved. Another currently known method for collecting SUW involves providing access and subsequent opening of urban waste skips using magnetic cards, for example the Italian healthcare insurance card, to be inserted into the appropriate slot in the skip corresponding to be type of waste to be deposited. Insertion of the card unlocks the lock, so allowing the user to operate the lever for opening the lid and deposit his/her bag in the skip.

In particular, Italian patent no. 0001391704 discloses a system for monitoring the collection of solid urban waste comprising means for controlling opening of the waste container. Said control systems consist of a control unit linked to locking and unlocking means for the closure means and key means intended for an individual user; each container is provided with means for identifying the key means connected to said control unit. The system furthermore provides memory means for container opening and closing events and a device for controlling container opening.

Although said approach makes it possible to achieve the aim of limiting migration of SUW deposition, the problem associated with incorrect selection of the SUW and the impossibility of associating the SUW and its weight with a household still remains. Many urban areas are currently seeing increasingly widespread use of skips equipped with load cells which transmit the weight of the contents of each skip via the cloud to the municipal authority, so making it possible to obtain an accurate weight of the SUW and to schedule its pick-up before the volume of the skip is completely filled. While theoretically reliable, this method is approximate because SUW varies in density. Various prior art patent documents are known in this connection which disclose differentiated SUW collection systems which, by means of sensors located inside the bin/skip, are capable of detecting the volume of waste present therein. Said information is transmitted by infrared technology or via the cloud to an operations room in order to schedule the action to be carried out.

Further systems provide the installation of technological recycling points with access controlled by means of suitable personalised cards which identify each individual user; once the user has gone to the recycling point, he/she can immediately identify him/herself by placing the chip close to the optical reader installed on a balance. The waste is then weighed and classified depending on the nature of the materials (paper, plastics, glass, organic, undifferentiated, etc.). The balance indicates the weight and outputs an adhesive label to be applied to the bag bearing a personal identification code and the actual weight of the waste. After each weighing operation, the system automatically opens the appropriate skip. The weight of waste actually produced by each user is thus calculated. The recycling points are equipped with sensors for detecting the waste actually deposited and video surveillance cameras which permit permanent remote monitoring, so as to avoid both vandalisation and roadside fly-tipping in the town.

Given the great variability in SUW density, said systems do not, however, permit sufficiently efficient pick-up and still less checking that the SUW has been correctly selected.

All in all, a huge range of methods are currently available for collecting SUW but, due to their intrinsic issues, none ensures effective and efficient waste management which simultaneously meets the needs of users, administrative authorities, recyclers and the environment.

The object of the present invention is to provide an apparatus and a method for the deposition and differentiated collection of solid urban waste which solve the problems of and improve on currently used systems and associated skips and which, by means of a single inventive solution, make it possible to:
- unambiguously identify the depositor who deposits the SUW,
- determine the type and weight of the SUW,
- identify, without any shadow of doubt, a depositor who has not correctly differentiated the waste in accordance with municipal authority guidelines,
- facilitate deposition for users at any time and in any collection centre in their home town,
- introduce taxation which takes account of the service actually provided by the municipal authority,
- establish a system which rewards diligent inhabitants and imposes a penalty on the thoughtless,
- supply companies entrusted with pick-up with the weight and volume of the SUW for each container,
- supply a forecast of the time until the container is full,
- supply, by way of an algorithm, the lowest cost pick-up route,
- supply to the municipal authority, by way of an alarm, any issues such as malfunction, completely full containers, vandalisation,
- supply to the municipal authority any data required to implement a strategy directed towards a circular economy,
- provide a system with hermetically sealed skips which can only be opened by authorised collectors, protected from bad weather and vandalisation and solidly anchored to an appropriate foundation,
- monitor the apparatus by way of video camera,
- entrust pick-up to as many specialist treatment companies as there are types of SUW.

### Concise description of the invention

The apparatus according to the present invention provides use by a user of:
- an assigned electronic identification key to gain access to a first "smart" skip upstream of the apparatus,
- a certain number of biodegradable plastic bags coloured by an unambiguous blend for each type of SUW to be separated, said bags being hermetically sealable and suitably numbered and identified.

In order to deposit the waste, the user places the electronic key in an appropriate receptacle positioned upstream of the apparatus. If the apparatus recognises the user as being authorised for deposition, a hatch automatically opens for deposit of the well sealed plastic bag containing the SUW. Once the bag has been deposited, its weight and contents are determined using appropriate sensors and load cells and the bag is finally transported by means of an automatic device to a skip devoted to this type of waste. Should said skip be full, in order to avoid inconveniencing the depositors, the SUW is automatically directed towards one or more spare skips which are to be emptied as soon as possible by the appointed operator. Should the depositor, having been identified as authorised by the apparatus, deposit a bag other than that provided (colour and identification not recognised), the depositor is informed that he/she must remove the bag within 5 seconds and if this is not done the apparatus will take the bag, place it in the undifferentiated bin and a penalty will subsequently be imposed on the depositor. In order to ensure complete transparency right along the subsequent SUW collection and management chain, all data associated with SUW streams coming into and going out from the collection device are managed by a terminal and made available by cloud technology to all relevant operators.

Thanks to the above, the apparatus and method provided by the present invention simultaneously meet all the following requirements:
- scientific management of the entire SUW collection chain;
- checking of the type and actual quantities of SUW without any issues;
- monitoring of the entire collection and recycling chain,
- convenience for inhabitants to be able to deposit their own household SUW at any time and at any collection point in their home town,
- real-time availability for the municipal authority and collectors on suitable monitors of the situation at all collection centres with preventive alarms about any issues,
- the possibility of relocating and/or allocating new collection units suggested by an algorithm which processes the data to minimise SUW transport sessions.

In the light of the above description, the proposed apparatus and method provide a focused and innovative technological solution for optimising SUW disposal. By completely eliminating the various issues associated with the methods used to date, this technology provides not only the administrative authorities and operators involved in the entire pick-up, recycling and treatment process but also users with real time data in order to optimise commendable behaviour and move towards closing the SUW recycling loop.

### Brief description of the drawings

Further features and advantages of the invention will become more apparent in the light of the detailed description of a non-exclusive preferred embodiment of the apparatus for the deposition, type checking and management of differentiated solid urban waste (SUW) which is shown by way of non-limiting example with the assistance of the appended drawings, in which:
Figure 1 shows an overall longitudinal sectional view of the apparatus,
Figure 2 shows two sectional views, one transverse AA and one longitudinal CC, of the smart skip,
Figure 3 show a transverse sectional view BB of one of the skips for differentiated collection,
Figure 4 shows a view from above of the structure which permits accurate positioning and protection of the skips made up of a unit for accommodating the skip upstream of the apparatus and a unit for accommodating one of the other skips for differentiated collection.

### List of reference numerals

100. Skip positioned upstream of the apparatus for deposition of the bag containing the SUW,
101. Closure hatch
110. Upper compartment
111. Load cell
112. Upper compartment structure
113. Toothed wheels
114. Sensor for detecting colour and symbols 115. Depth sensor
116. Bushes
117. Movement container
118. Bag container
119. Bag discharge hatches
120. Lower base compartment
121. Base compartment structure
130. Bag containing SUW
140. Devices for managing the apparatus
150. Rack
160. Structure for positioning and protecting the skips
161. Unit of the structure for positioning and protecting skip 100
162. Unit of the structure for positioning and protecting skips 200, 300, 400, 500, 600 and 700
163. Bases of units 161, 162
164. Frame of structure 160
165. Magnetic proximity sensors 165
200. Skip for collecting bags containing organic waste
300. Skip for collecting bags containing metals
400. Skip for collecting bags containing glass
500. Skip for collecting bags containing plastics
600. Skip for collecting bags containing paper and cardboard
700. Spare skip for collecting excess bags

### Description of a preferred embodiment of the invention

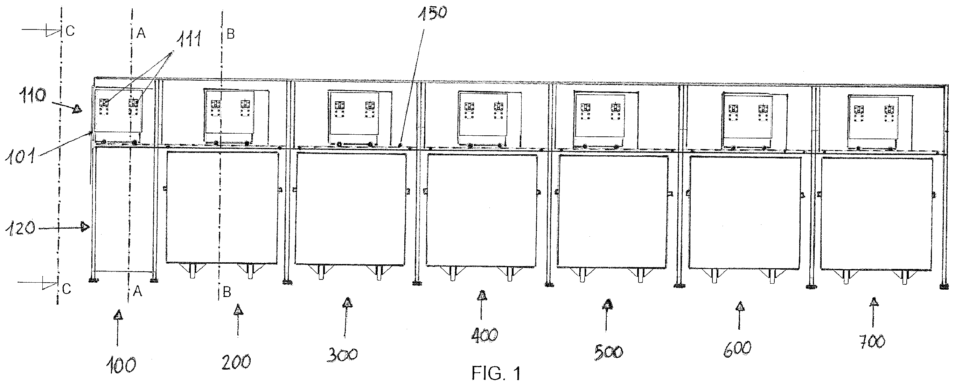

The apparatus according to the present invention, shown in a preferred embodiment in Figure 1, provides using at least one item of packaging in the form of a thin, flexible film of biodegradable plastics material, namely a bag, of an unambiguous colour with a hermetic closure and suitably numbered and identified, for containing one of the various categories of SUW to be deposited, and an identification key means assigned to an individual user authorised to deposit.

The apparatus is made up of a container 100, namely a skip, positioned upstream of the apparatus, for deposition of said bag 130 containing differentiated SUW, and release thereof into a specific container, namely a skip.

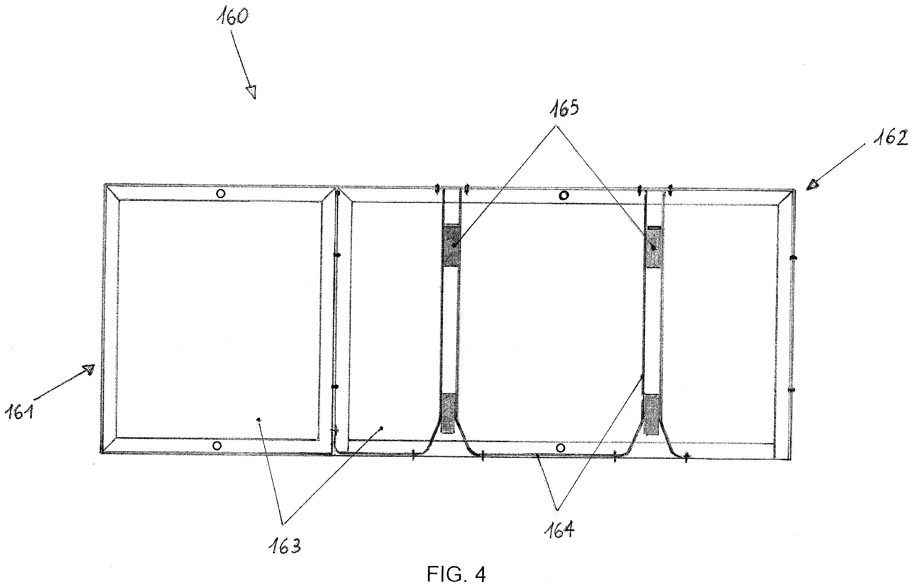

To this end, the apparatus is provided with means 113, 117, 118 which slide on motorised rack means 150, for containing, transporting and releasing the bag 130 containing the differentiated SUW into at least one of containers 200, 300, 400, 500, 600 or 700, namely skips for collecting bags of SUW, arranged along the line of operation of the apparatus. All of skips 100, 200, 300, 400, 500, 600 and 700 are inserted in series into a structure 160, shown in Figure 4, anchored to the ground and capable of ensuring the precise positioning and protection thereof.

The structure 160 is made up of a unit 161 for receiving the skip 100 positioned upstream of the apparatus, and at least one unit 162 for receiving a skip (200, 300, 400, 500, 600, 700); each of said units is made up of a base 163 anchored to the ground and of angle pieces and U profiles forming a frame 164 for the correct positioning and fastening of each skip along the line of operation of the apparatus.

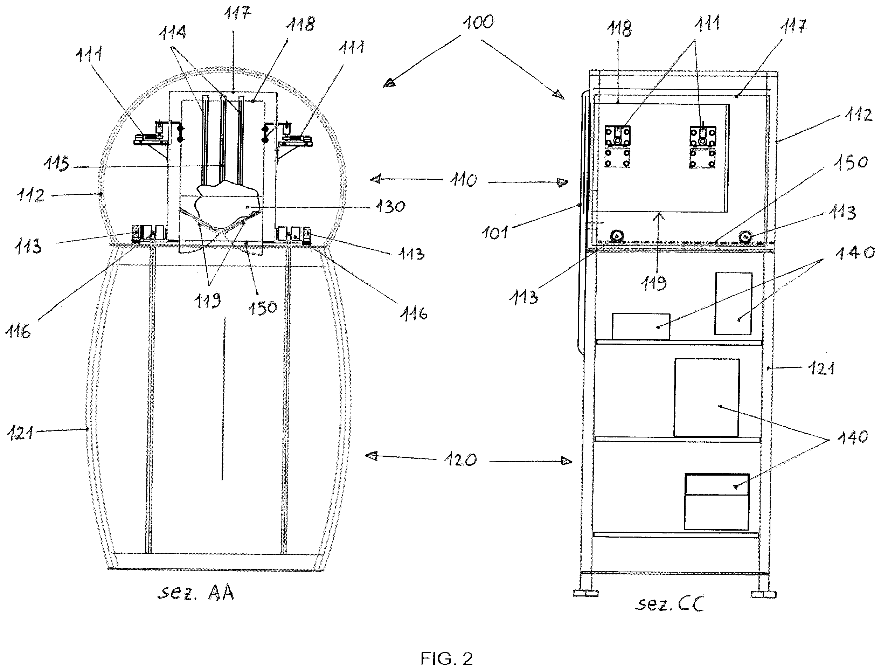

Figure 2 shows transverse AA and longitudinal CC sectional views of the smart skip 100 which is provided for accepting the SUW deposited by means of an identification key assigned to an individual user, for managing all the motorised mobile devices and sensors present in the apparatus, and for transmitting the acquired data to an on-board computer which in turn transmits them via the cloud to the appointed operators.

More specifically, the skip 100 is subdivided in two compartments; an upper one 110 delimited by a structure 112, for example of galvanised or stainless steel or aluminium, and a lower one 120 delimited by a structure 121.

The upper compartment 110 is equipped with a hatch 101, located on the structure 112, the opening of which is automatically actuated by means of a mechanical actuator; inside said compartment 110 there is a container 118, capable of containing a bag 130 containing differentiated SUW inside, the bottom of said container being provided with two hatches 119 which open by means of an appropriate actuator to release the bag under the action of gravity.

The container 118 is furthermore provided on the inside with sensors 114 for detecting the colour and symbols placed on the bag 130 containing the SUW and is mounted on four bending-beam load cells 111, having, for example, a capacity of 80 kg and precision to one gram.

The lower compartment 120 of the skip 100 is provided with devices 140, such as: a control unit for managing all the devices and sensor means of the apparatus, memory means for collecting the data, means for processing said data, means for transmission via the cloud, emergency battery means and electrical connections.

Once the bag 130 has been read by the sensors 114, for example within a period of around three seconds, the hatch 101 closes again.

In the subsequent stage, over a period of around one second, weighing is performed by the load cells 111 and the data acquired by the sensors 114 are transmitted to the electronic devices 140; on the basis of the data received, the control unit manages all the motorised mobile devices and sensors present in the apparatus and transmits the acquired data to an on-board computer which in turn transmits them via the cloud to the appointed operators.

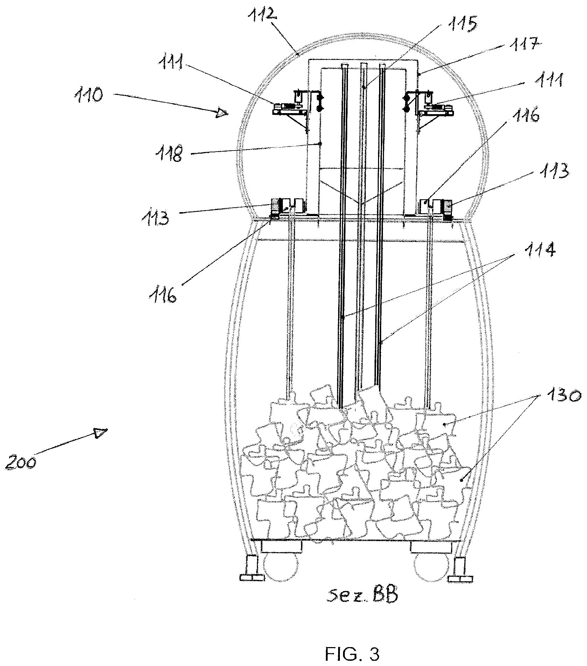

Once this operation has been performed, the bag 130 containing the SUW is transferred along the rack 150 by means of a movement container 117 which is provided with bushes 116 and toothed wheels 113 and is actuated by a stepper motor, and deposited into one of the appropriate skips 200, 300, 400, 500, 600 or 700, shown in transverse section BB in Figure 3, intended for collecting each type of differentiated waste; said containers are for example: 200 for collecting organic waste, 300 for collecting metals, 400 for collecting glass, 500 for collecting plastics, 600 for collecting paper and cardboard; to avoid errors, a proximity sensor checks that the motor travels the correct distance set by the control unit and actuated by the stepper motor.

Should one of said skips be full, the apparatus will no longer permit discharge into it and, to avoid inconveniencing users, automatically directs the SUW towards one or more spare skips 700 which are to be emptied as soon as possible by the appointed operator who is notified by an appropriate alarm via the cloud.

In a preferred embodiment of the apparatus, skips 200, 300, 400, 500, 600 and 700, are made of galvanised steel, have a capacity of 1,440 litres and a loading aperture of 80×120 cm.

The movement container 117 has three stopping positions for unloading the waste into each of said skips, respectively at 30 cm, 60 cm and 90 cm, so that each skip can be filled as full as possible and any accumulations reduced. When the load cells sense that the movement container 117 is completely empty, an actuator returns it to the waiting position prior to renewed use; the whole procedure takes on average around 8 seconds. Skips 200, 300, 400, 500, 600 and 700 present in the apparatus are provided with depth sensors 115, one in the central part and two at the sides, for detecting a filling coefficient and transmitting the associated data to the control unit for data collection and processing; said coefficient is obtained by comparing the remaining useful volume of the skip with the volume of the skip (1,440 litres). If the actual volume and actual weight are known, the density of each kind of SUW is also obtained, a value which is of use for optimising pick-up of the SUW. Availability of a historical sequence means that the density of the individual types of SUW is the most accurate which can be obtained. The resultant coefficient provides an overall value of the residual capacity of a skip for transmission to the recycling operator/staff for this specific type of waste.

Figure 4 shows the structure 160 which permits precise positioning and protection of skips 100, 200, 300, 400, 500, 600 and 700.

More specifically, Figure 4 shows the structure 160 made up of a square-shaped unit 161 for accommodating the skip upstream of the apparatus and a rectangular unit 162 for accommodating one of skips 200, 300, 400, 500, 600 or 700 for differentiated collection; unit 162 is repeated in series along the apparatus.

The structure 160 serves purposes which include anchoring each skip firmly to the ground by fastening to a suitable foundation and so protect them from any vandalisation and ensuring that each skip adopts a precise position in the system with the aim of permitting proper discharge of the SUW.

The structure 160 is provided for these purposes with magnetic proximity sensors 165 capable of sending a signal to the control unit of the apparatus regarding incorrect positioning of each skip.

Positioning the apparatus requires a level foundation for accommodating the guides of the structure 160; the level foundation must be strong, for example a reinforced concrete slab. Once the guides have been mounted, the factory-assembled container 100 is installed, said container accommodating all the automation and process control equipment and the rack. Finally, the other accessory parts of the rack are assembled and the remaining skips 200, 300, 400, 500, 600 and 700 are installed.

Once the hardware has been installed, an electrical connection is provided and a lamp post equipped with a twilight switch and a video camera is put into position. Since the apparatus has already been laboratory tested, it is ready for operation once the above operations are complete.

The maximum estimated time for discharge of a bag into one of the respective skips for differentiated collection is around eight seconds over and above the first three taken to identify the depositor and the product.

The apparatus and method according to the present invention ensure that each recycling operator for a specific type of SUW only receives data which are of interest and relevance regarding one or more of skips 200, 300, 400, 500, 600 or 700; alarms are received from skips which are filling up and those which may be full as well as notification of the use of a spare skip, the use of which is charged to the operator at a predetermined hourly rental rate by the municipal authority in order to encourage prompt pick-up and avoid inconveniencing inhabitants.

The method which makes use of the apparatus for the deposition, type checking and management of differentiated solid urban waste (SUW) according to the present invention is broken down into the following steps:
- the user, in order to deposit the waste, places the key in an appropriate receptacle positioned on the smart skip 100,
- if the user is recognised as being authorised to deposit, the skip 100 opens and allows the deposit of the bag 130 containing the SUW to be differentiated,
- using appropriate sensors 114 and load cells 111, the weight and contents of the bag 130 are identified,
- the bag 130 is transported towards one of skips 200, 300, 400, 500 or 600 devoted to this type of waste and deposited therein awaiting subsequent collection by the appointed operator,
- if one of skips 200, 300, 400, 500 or 600 is full, the bag 130 is transported to and deposited in a spare skip 700 awaiting subsequent collection by the appointed operator.

Thanks to the apparatus according to the present invention, each depositor can be provided with a kind of current account containing the date of deposition, the type and quantity deposited, the total of all depositions to date and the cost which is to be paid for disposal. Each administrative authority sets the price to be paid to the depositor for some waste (e.g. steel, aluminium, etc.) and the cost for disposal of other products (e.g. undifferentiated, wet waste, etc.). Depositors can access their current account in real time via the cloud and find out their balance. The specialist companies appointed to pick-up each type of SUW check its type on emptying the bags. Should there be any irregularity with a bag, a photograph is taken and sent to the municipal authority which, having identified the depositor on the basis of the number on the bag, imposes a penalty and collects the amount (for obvious reasons, the right to apply a penalty is reserved to the municipal authority).

The apparatus and method for the deposition, type checking and management of differentiated solid urban waste (SUW) according to the present description can be modified and varied in many ways, all of which fall within the inventive concept set out in the appended claims.

Any details can be replaced with other technically equivalent components as required without extending beyond the scope of protection of the present invention.

Although the apparatus and method have been described with particular reference to the appended figures, the reference numerals used in the description and claims are used to facilitate understanding of the invention and do not in any way limit the claimed scope of protection.

## Claims

1. Apparatus for the deposition, type checking and management of differentiated solid urban waste (SUW) comprising:
- at least one item of packaging in the form of a thin, flexible film of biodegradable plastics material, namely a bag, of an unambiguous colour with a hermetic closure and suitably numbered and identified, for containing one of the various categories of SUW to be deposited, and
- an identification key means assigned to an individual user authorised to deposit,
**characterised by** a container (100), namely a skip, positioned upstream of the apparatus, for deposition of said bag (130) containing differentiated SUW, provided with:
- sensor means for identifying said key means,
- closure means (101),
- sensor means for controlling opening of the closure means,
- a control unit linked to locking and unlocking means for said closure means,
- sensor means (114) for containing and identifying a bag (130),
**and characterised by** means (113, 117, 118) which slide on motorised rack means (150), for containing, transporting and releasing the bag (130) into at least one container (200, 300, 400, 500, 600, 700), namely a skip for collecting SUW, said skips (100, 200, 300, 400, 500, 600, 700) being inserted in series into a structure (160) anchored to the ground and capable of ensuring the precise positioning and protection thereof from vandalisation, bad weather and scavenging by animals and people.

2. Apparatus according to claim 1, **characterised in that** the skip (100) is provided with an upper compartment (110) delimited by a structure (112) equipped with a hatch (101), the opening of which is automatically actuated, and a lower compartment (120) delimited by a structure (121), said upper compartment (110) being provided with:
- a container (118) capable of containing a bag (130) and provided at the bottom with closure means (119) which, by means of an actuator, open to release the bag under the action of gravity,
- sensor means (114) positioned inside said container (118) for detecting the colour and symbols placed on the bag (130) containing the SUW,
- bending-beam load cells (111) on which the container (118) is mounted,
- a movement container (117) containing said container (118) provided with bush (116) and toothed wheel (113) means meshing with the rack means (150), and said lower compartment (120) being provided with devices (140), such as:
- a control unit for managing all the devices and sensor means of the apparatus,
- memory means for collecting the data,
- means for processing said data,
- means for transmission via the cloud,
- emergency battery means,
- electrical connections.

3. Apparatus according to claim 1, **characterised in that** the structure (160) is made up of a unit (161) for receiving the skip (100) positioned upstream of the apparatus, and at least one unit (162) for receiving a skip (200, 300, 400, 500, 600, 700), each of said units being made up of a base (163) anchored to the ground and of angle pieces and U profiles forming a frame (164) for the correct positioning and fastening of each skip along the line of operation of the apparatus.

4. Apparatus according to claim 3, **characterised in that** the structure (160) is provided with proximity sensor means (165) for sending signals regarding the position of each skip along the line of operation of the apparatus.

5. Apparatus according to preceding claims, **characterised by** sensor means for detecting the position of the movement container (117) along the rack (150) and actuating a stepper motor to bring about three stopping positions at the level of each skip (200, 300, 400, 500, 600, 700).

6. Apparatus according to preceding claims, **characterised by** a spare skip (700), positioned downstream of the apparatus, for collecting bags which cannot be placed in the skips (200, 300, 400, 500, 600).

7. Apparatus according to preceding claims, **characterised by** sensors (115) for detecting the filling coefficient of each skip (100, 200, 300, 400, 500, 600, 700), said acquired data being received by the control unit.

8. Method for the deposition, type checking and management of differentiated solid urban waste (SUW) by using the apparatus according to preceding claims, **characterised by** the following steps:
- actuating the apparatus by means of an identification key means assigned to an individual user authorised to deposit,
- automatic opening of the hatch (101) of the skip (100),
- deposition, by the user, of the bag (130) containing the differentiated SUW inside the container (118),
- identification of the contents of the bag (130) by means of sensors means (114),
- identification of the weight of the bag (130) by means of load cells (111),
- automatic transfer of the bag (130) towards one of the skips (200, 300, 400, 500, 600) by means of the movement container (117) containing the container (118),
- release of the bag (130) into one of the skips (200, 300, 400, 500, 600) by opening the two hatches (119) of the container (118),
- optional transport and release of the bag (130) into one or more spare skips (700) in the event of one of the skips (200, 300, 400, 500, 600) being completely full or not suitable for collection of a bag (130) containing the SUW.
